# EUROPEAN PATENT SPECIFICATION

(11) **EP 3 704 100 B1**
(45) Date of publication and mention of the grant of the patent: **30.08.2023**
(21) Application number: 18873485.9
(22) Date of filing: 30.10.2018
(51) Int. Cl.: C07F 5/02

(54) **NOVEL PROCESS FOR THE PREPARATION TAVABOROLE AND ITS INTERMEDIATES**
NEUES VERFAHREN ZUR HERSTELLUNG VON TAVABOROL UND DESSEN ZWISCHENPRODUKTE
NOUVEAU PROCÉDÉ DE PRÉPARATION DE TAVABOROLE ET DE SES INTERMÉDIAIRES

(30) Priority: 02.11.2017 IN 201721039067
(43) Date of publication of application: 09.09.2020
(60) Divisional application: 22190908.8
(73) Proprietor: Halcyon Labs Private Limited, Mumbai Maharashtra 400015 (IN)
(72) Inventor: MERCHANT, Rupa, Mumbai Maharashtra 400 006 (IN); MERCHANT, Aditya, Mumbai Maharashtra 400 026 (IN); LIMBAD, Piyushkumar, Ahmedabad Gujarat 380051 (IN); PANSURIYA, Akshay, Amreli Gujarat 365610 (IN)
(74) Representative: Salomäki, Juha Kari Ensio
(86) International application number: PCT/IN2018/050702
(87) International publication number: WO 2019/087208

(56) References cited:
- WO-A1-2017/183043
- WO-A1-2017/183043
- SENE SAAD ET AL: "A combined experimental-computational study of benzoxaborole crystal structures", CRYSTENGCOMM, vol. 16, no. 23, 20 March 2014 (2014-03-20), page 4999, XP055814453, GB ISSN: 1466-8033, DOI: 10.1039/c4ce00313f

## Description

### FIELD OF THE INVENTION

The present invention provides a novel and improved process for the preparation of Tavaborole of Formula (I) and its pharmaceutically acceptable salts. The present invention also provides novel intermediates and process for the preparation of intermediates used in the preparation of Tavaborole.

### BACKGROUND OF THE INVENTION

Tavaborole is an oxaborole antifungal indicated for the topical treatment of onychomycosis of the toenails due to *Trichophyton rubrum* or *Trichophyton mentagrophytes.* Tavaborole, chemically known as 5-fluoro-1,3-dihydro-1-hydroxy- 2,1-benzoxaborole, is represented by compound of formula I:

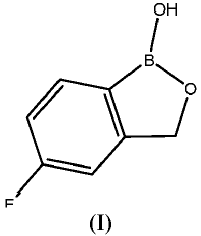

Tavaborole is currently marketed in United States under the trade name KERYDIN^{®} topical solution, 5% contains Tavaborole, 5% (w/w) in a clear, colourless alcohol-based solution for topical use. Tavaborole is a white to off-white powder.

Tavaborole was first time disclosed in US 5880188. US '188 discloses a process for preparation of Tavaborole as depicted in scheme-1.

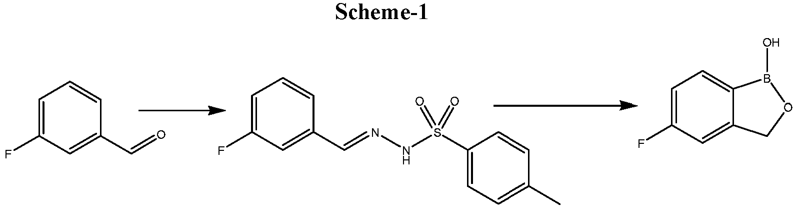

US '188 discloses a process for the preparation of Tavaborole, which comprises reaction of 3-chlorobenzaldehyde with p-toluene-sulphonylhydrazide to provide the 3-chlorobenzaldehyde tosyl hydrazide. The said tosyl hydrazide adduct is further reacted with boron tribromide in the presence of Ferric chloride catalyst at reflux temperature to give Tavaborole.

The major drawback of the process as disclosed in US '188 is the use of Boron tribromide, which is extremely toxic by inhalation and it is fatal by ingestion and hence special handling needed leads to unsatisfactory processes for industrial application. Further, the process as depicted in US '188 provides low yield.

WO 2004009578 discloses another process for the preparation of Tavaborole, which comprises the reaction of (2-bromo-5-fluoro-phenyl)-methanol with ethyl vinyl ether in the presence of PPTS to provide the 1-Bromo-2-(1-ethoxy-ethoxymethyl)-4-fluoro-benzene. The resulting compound is reacted with n-butyl lithium at -78°C in dry THF, which is further reacted with trimethyl borate at the same temperature. The resulted compound undergone treatment with hydrochloric acid to provide Tavaborole. The reaction sequence of above patent is illustrated in scheme 2.

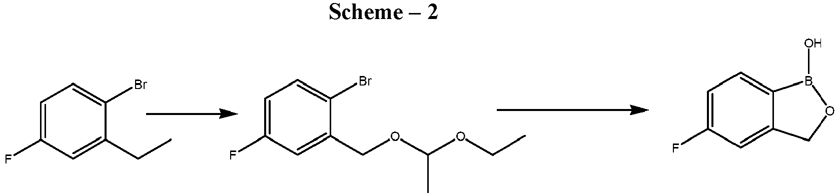

The major disadvantage of the process as disclosed in WO 2004009578 is the use of n-butyl lithium and trialkyl borate, which invokes the formation of dimer and trimer impurities. The removal of dimer and trimer impurities needs an additional step of purification, which increases the overall cost of synthesis. Further, due to the explosive nature of n-butyl lithium, it is difficult to handle at plant scale. Also, the said reaction is carried out at temperature of -78°C, which is difficult to attain during commercial production.

WO 2006089067 discloses various process for the preparation of Tavaborole and one of such process involves the reaction of aldehyde intermediate with bis(pinacolato)diboron in the presence of transition metal catalyst to provide the Pinacol ester. The resulted Pinacol ester is then oxidatively cleaved to give the Boronic acid compound. The obtained Boronic acid compound is undergone reduction with a reducing agent followed by cyclization to give Tavaborole as a residue, which is further purified by using column chromatography. The reaction sequence of above patent is illustrated in scheme-3.

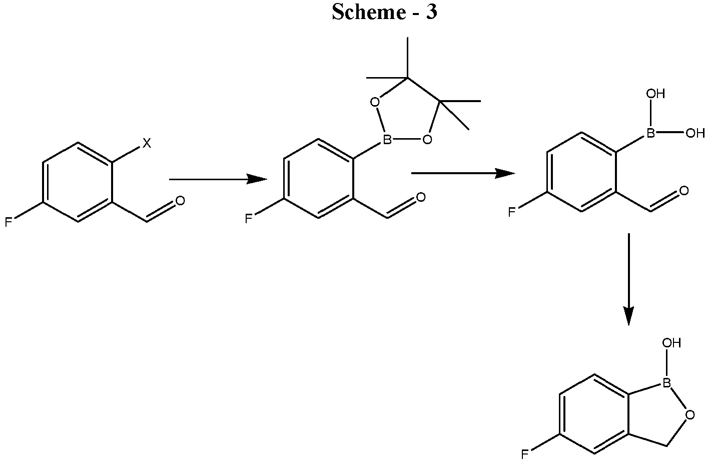

The main drawbacks of the above process is the use of laborious column chromatographic purification, which not only increases the consumption of solvent but also difficult to handle on the commercial scale, including the obvious practical limitations of column chromatography on industrial scale.

WO 2017125835 discloses an alternative process for the preparation of Tavaborole as depicted in below scheme-4:

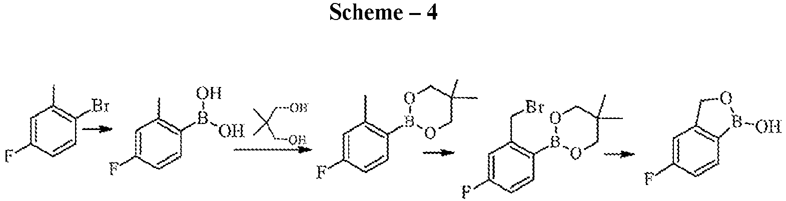

The main drawback of the process as disclosed in WO 2017125835 is the use of n-butyl lithium and cryogenic temperature of -78°C, which makes this difficult to apply for industrial scale.

CN 106467557 A discloses the preparation of Tavaborole, which comprise the reaction of 3-fluorobenzyl alcohol with BC13 in an organic solvent, and directly subjected the obtained reaction liquid to the cyclization reaction to provide Tavaborole.

The major disadvantage with the above prior art process is the use of hazardous n-butyl lithium may cause for many inconvenient reactions such as fire or explosion, irritation or toxic fumes in a fire, it produces lower yield and higher impurities. The complexity of the known processes for the preparation of the Tavaborole and its intermediates are used expensive, corrosive/toxic reagents, drastic reactions conditions and purification by column chromatography. The above process reagents or conditions are difficult to apply for industrially scale up. WO 2017/183043 A1 discloses a process for the preparation of Tavaborole. Hence, there is consequently a need for a novel process for the preparation of Tavaborole and its intermediates. The above disadvantages are overcome by the present invention provides an industrial viable process for the preparation of Tavaborole (I) and this method is simple and efficient, wide-ranging sources of raw materials, synthetic route is simple, easy operation, mild reaction conditions, high yield with low synthesis cost, easy post-processing, eco-friendly and suitable for industrial production.

### OBJECT OF THE INVENTION

The principal object of the present invention is to provide an improved process for the preparation of Tavaborole, which alleviates the drawbacks of prior art processes.

It is another object of the present invention to provide a cost effective and industrially feasible process for the preparation of Tavaborole, which minimizes the formation of by products and gives Tavaborole in high yield and purity.

It is still another object of the present invention to provide a novel economically significant process for the preparation of Tavaborole or its pharmaceutically acceptable salts for large scale industrial preparation.

It is still another object of the present invention to provide an improved and commercially viable process for the preparation of Tavaborole via novel intermediates of Formula (III) and (II).

### SUMMARY OF THE INVENTION

In one aspect, the present invention provides an improved process for the preparation of Tavaborole of formula (I) comprising the steps of:
a) treating (2-bromo-5-fluoro-phenyl)-methanol of formula (V) with trityl chloride in the presence of base and suitable solvent to give 1-bromo-4-fluoro-2-trityloxymethyl-benzene of formula (IV); 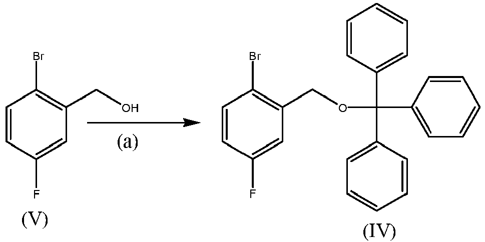
b) reacting of compound of formula (IV) with bis(pinacolato)diboron in the presence of a transition metal catalyst and a base in suitable solvent to give 2-(4-fluoro-2-tritylmethyl-phenyl)-4,4,5,5-tetramethyl-[1,3,2]dioxaborolane of compound of formula (III); 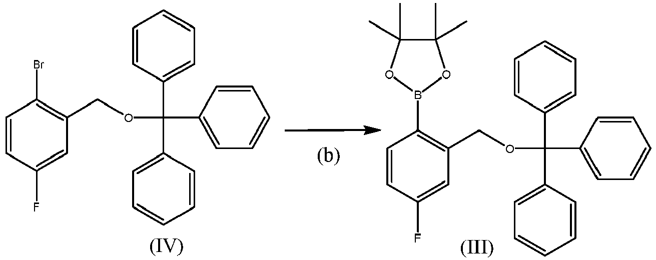
c) optionally transesterifying the compound of formula (III) with diethanolamine in suitable solvent to provide the compound of formula (II); 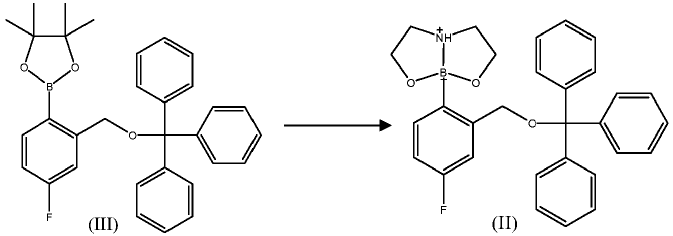
d) deprotecting and cyclizing the compound of formula (II) or (III) in the presence of suitable acid and solvent to give Tavaborole of formula (I); and 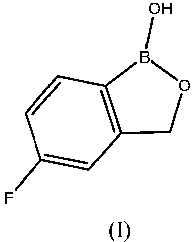
e) optionally purifying Tavaborole of formula (I).

In another aspect, the present invention provides an improved process for the preparation of Tavaborole of formula (I) comprising the steps of:
a) treating (2-bromo-5-fluoro-phenyl)-methanol of formula (V) with trityl chloride in the presence of base and suitable solvent to give 1-bromo-4-fluoro-2-trityloxymethyl-benzene of formula (IV);
b) reacting the compound of formula (IV) with bis(pinacolato)diboron in the presence of a transition metal catalyst and a base in suitable solvent to give 2-(4-fluoro-2-tritylmethyl-phenyl)-4,4,5,5-tetramethyl-[1,3,2]dioxaborolane of compound of formula (III);
c) deprotecting and cyclizing the compound of formula (III) in the presence of suitable acid and solvent to give Tavaborole of formula (I); and
d) optionally purifying Tavaborole of formula (I).

In yet another aspect, the present invention provides an improved process for the preparation of Tavaborole of formula (I) comprising the steps of:
a) treating (2-bromo-5-fluoro-phenyl)-methanol of formula (V) with trityl chloride in the presence of base and suitable solvent to give 1-bromo-4-fluoro-2-trityloxymethyl-benzene of formula (IV);
b) reacting the compound of formula (IV) with bis(pinacolato)diboron in the presence of a transition metal catalyst and a base in suitable solvent to give 2-(4-fluoro-2-tritylmethyl-phenyl)-4,4,5,5-tetramethyl-[1,3,2]dioxaborolane of compound of formula (III);
c) transesterifying the compound of formula (III) with diethanolamine in suitable solvent to provide the compound of formula (II);
d) deprotecting and cyclizing the compound of formula (II) in the presence of suitable acid and solvent to give Tavaborole of formula (I); and
e) optionally purifying Tavaborole of formula (I).

In another aspect, the present invention provides an improved process for the preparation of Tavaborole of formula (I) comprising the steps of:
a) deprotecting and cyclizing the compound of formula (III) in the presence of suitable acid and solvent to give Tavaborole of formula (I); and
b) optionally purifying Tavaborole of formula (I).

In another aspect, the present invention provides an improved process for the preparation of Tavaborole of formula (I) comprising the steps of:
a) deprotecting and cyclizing the compound of formula (II) in the presence of suitable acid and solvent to give Tavaborole of formula (I); and
b) optionally purifying Tavaborole of formula (I).

In yet another aspect, the present invention provides novel intermediate of compound of formula (III).

In yet another aspect, the present invention provides the use of compound of formula (III) for the preparation of Tavaborole.

In yet another aspect, the present invention provides novel intermediate of compound of formula (II).

In yet another aspect, the present invention provides the use of compound of formula (II) for the preparation of Tavaborole.

In yet another aspect, the present invention provides an efficient, industrially advantageous and environmentally friendly process for the preparation of Tavaborole in high overall yield and with high purity using novel intermediates.

### DETAILED DESCRIPTION OF INVENTION

Reference will now be made in detail to the preferred embodiments of the invention. This invention may, however, be embodied in many different forms and should not be construed as limited to the embodiments set forth herein.

As used herein, "comprising" means the elements recited, or their equivalents in structure or function, plus any other element or elements which are not recited. The terms "having" and "including" are also to be construed as open ended unless the context suggests otherwise.

When a molecule or other material is identified herein as "pure", it generally means, unless specified otherwise, that the material has 99% purity or higher, as determined using methods conventional in the art such as high performance liquid chromatography (HPLC), gas chromatography (GC), or spectroscopic methods. In general, this refers to purity with regard to unwanted residual solvents, reaction by-products, impurities, and unreacted starting materials.

The present invention provides a process for the preparation of Tavaborole of formula (I) comprising the steps of:
a) treating (2-bromo-5-fluoro-phenyl)-methanol of formula (V) with trityl chloride in the presence of base and suitable solvent to give 1-bromo-4-fluoro-2-trityloxymethyl-benzene of formula (IV); 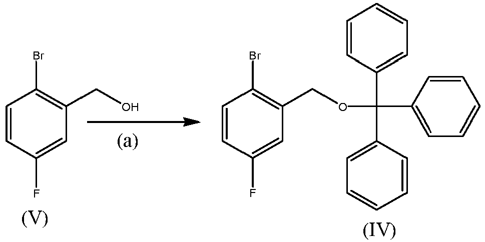
b) reacting of compound of formula (IV) with bis(pinacolato)diboron in the presence of a transition metal catalyst and a base in suitable solvent to give 2-(4-fluoro-2-tritylmethyl-phenyl)-4,4,5,5-tetramethyl-[1,3,2]dioxaborolane of compound of formula (III); 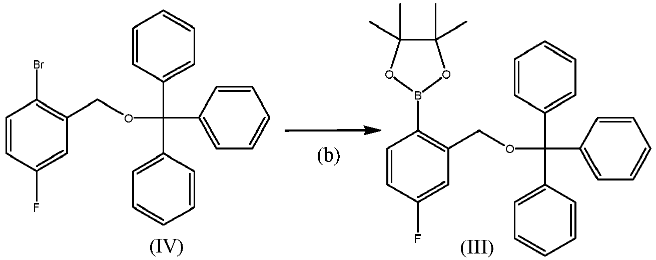
c) optionally transesterifying the compound of formula (III) with diethanolamine in suitable solvent to provide the compound of formula (II); 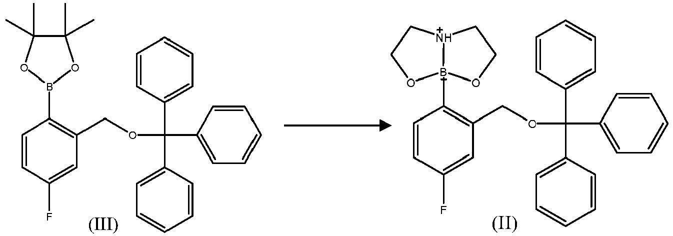
d) deprotecting and cyclizing the compound of formula (II) or (III) in the presence of suitable acid and solvent to give Tavaborole of formula (I); and 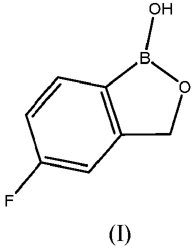
e) optionally purifying Tavaborole of formula (I).

Processes for obtaining the compound of formula (V) can be according to the literature methods.

According to the present invention, step a) involves the treatment of compound of formula (V) with trityl chloride in the presence of base and suitable solvent to provide the compound of formula (IV). The reaction of step a) can be carried out at any suitable range of temperature generally at 20°C - 140°C, preferably at 20°C - 60°C over a period of about 1 to 5 hours, preferably for 2 to 4 hours. In compound of formula (V), other leaving group like chloro, fluoro, iodo, triflate etc. in place of bromine can be used.

The suitable solvent used for the above step a) is selected from the group comprising of alcohols such as methanol, ethanol, propanol, isopropanol and butanol and the like; chlorinated hydrocarbons such as methylene chloride, chloroform and the like; ethers such as diisopropyl ether, methyl tert-butyl ether, dioxane, tetrahydrofuran and the like; esters such as ethyl acetate, isopropyl acetate and the like; ketone solvent such as methyl isobutyl ketone, acetone and the like; polar aprotic solvents such as dimethylformamide, dimethyl sulfoxide, N-methylpyrrolidone, and water or mixture thereof.

The suitable base used for the above reaction step a) is selected from organic or inorganic base, depending upon the class of solvent. The organic base is selected from the group comprising of triethylamine, diisopropylamine, diisopropylethylamine, piperidine, pyridine N-methyl morpholine N, N-dimethylbenzylamine, picoline, lutidine and the like; wherein the inorganic base is selected from the group comprising of metal carbonate such as lithium carbonate, sodium carbonate, potassium carbonate, barium carbonate, calcium carbonate and magnesium carbonate; metal bicarbonate such as sodium bicarbonate, potassium bicarbonate, barium bicarbonate, calcium bicarbonate and magnesium bicarbonate and metal hydroxide such as sodium hydroxide, potassium hydroxide, barium hydroxide, calcium hydroxide and magnesium hydroxide.

The compound of formula (IV) can be isolated and/or purified by any conventional method known to one of skill in the art.

According to the present invention, step b) involves the reaction of compound of formula (IV) with bis(pinacolato)diboron in the presence of a transition metal catalyst and a base in suitable solvent to give the compound of formula (III). The reaction of step b) can be carried out at any suitable range of temperature generally at 20°C - 200°C, preferably at 70°C - 120°C over a period of about 5 to 25 hours. In place of bis(pinacolato)diboron other suitable borylation reagent known in the art can be used.

The transition metal catalyst as used in step b) comprises one or more phosphine ligands which are complexing the transition metal. Most preferred are palladium phosphine complexes like Pd(PPh₃)₄, PdCl₂(dppf).CH₂Cl₂, and related palladium catalysts which are complexes of phosphine ligands like P(i-Pr)₃, P(cyclohexyl)₃, 2-dicyclohexylphosphino-2',4',6'-triisopropylbiphenyl (X-Phos), 2-dicyclohexyl phosphino-2',6'-dimethoxybiphenyl (S-Phos), (2,2"-bis(diphenylphosphino)-1,1"-binaphthyl) (BINAP) or Ph2P(CH2)ₙPPh₂ with n is 2 to 5. More preferred is PdCl₂(dppf).CH₂Cl₂ i.e. [1,1'-Bis(diphenylphosphino)ferrocene] dichloropalladium (II) complex with dichloromethane.

The preferred base as used in step b) should be able to catalyse a borylation reaction. Examples are potassium acetate, potassium phosphate, potassium carbonate, sodium or lithium analogues of these potassium salts, trimethylamine and triethylamine. More preferred is potassium acetate.

The suitable solvent used for the above step b) is selected from the group comprising polar aprotic solvent such as acetonitrile, tetrahydrofuran, dioxane, dimethylformamide, dimethylacetamide, dimethyl sulfoxide, hexamethylphsophoric triamide, sulforan, N-methylpyrrolidone and the like; aromatic hydrocarbon solvent such as benzene, toluene, xylene, ethylbenzene, diethylbenzene, styrene, vinyltoluene, divinylbenzene, alpha-methylstyrene or mixture thereof.

According to present invention, step c) involves the transesterification of compound of formula (III) with diethanolamine in suitable solvent to provide the compound of formula (II). The reaction of step c) can be carried out at any suitable range of temperature generally at 20°C - 80°C, preferably at 20°C - 50°C over a period of about 5 to 25 hours.

The transesterification reaction of step c) alleviates the need of further isolation and/or purification of compound of formula (III) i.e. compound of formula (III) can be *in-situ* converted into Tavaborole (I) via transesterification.

The transesterification reaction of step c) is carried out in the same solvent as used for the preparation of compound of formula (111) i.e. step b).

According to the present invention, step d) involves deprotection and cyclization of the compound of formula (II) or (III) in the presence of suitable acid and solvent to give Tavaborole of formula (I). The reaction of step d) can be carried out at any suitable range of temperature generally at 20°C - 80°C, preferably at 20°C - 50°C over a period of about 5 to 25 hours.

In step d) the deprotection and cyclization of compound of formula (II) or (III) is carried out in the single steps in the presence of suitable acid and solvent. Suitable acids are selected from the group consisting of organic carboxylic acids, sulfonic acids, and inorganic acids. The organic carboxylic acid may be formic acid, oxalic acid, acetic acid, trimethyl acetic acid or trifluoroacetic acid, preferably acetic acid. The sulfonic acid may be methanesulfonic acid or p-toluene sulfonic acid. The inorganic acid may be hydrochloric acid, hydrobromic acid, sulfuric acid, pivalic acid or phosphoric acid, preferably hydrochloric acid.

The solvent used for step d) is same as used in the step a) as mentioned herein above.

The deprotection and cyclization of compound of formula (II) or (III) of step d) may also be carried out in the presence of quaternary ammonium salt selected from a group comprising of tetrabutylammonium chloride (TBAC), tetrabutylammonium bromide (TBAB), tetrabutylammonium iodide (TBAI), tetrabutyl ammonium sulfate, cetyl trimethyl ammonium iodide, tetraethylammonium chloride (TEAC), tetrapropylammonium bromide (TPAB), tetrabutylammonium fluoride (TBAF), tetrapropylammonium perruthenate (TPAP), benzyltrimethylammonium chloride (BTMAC), benzyltriethylammonium chloride (BTAC), tetrabutylammonium hydroxide (TBAH), methyltricaprylammonium chloride (MTCAC), tributylmethylammonium chloride (MTBAC) or trioctylmethylammonium chloride. Preferably quaternary ammonium salt is TBAB.

The isolation of Tavaborole can be optionally carried out by addition of a solvent selected from the group comprising of alcohols such as methanol, ethanol, propanol, isopropanol and butanol and the like; chlorinated hydrocarbons such as methylene chloride, chloroform and the like; ethers such as diisopropyl ether, methyl tert-butyl ether, dioxane, tetrahydrofuran and the like; esters such as ethyl acetate, isopropyl acetate butyl acetate and the like, polar aprotic solvents such as dimethylformamide, dimethyl sulfoxide, N- methylpyrrolidone and the like ; and water or mixture thereof.

According to the present invention, step (e) comprises optionally purification of Tavaborole by recrystallizing or slurring in suitable solvent selected from the group comprising alcohols such as methanol, ethanol, propanol, isopropanol and butanol and the like; ketones such as acetone, ethyl methyl ketone, diethyl ketone, methyl isobutyl ketone, and the like; chlorinated hydrocarbons such as methylene chloride, chloroform and the like; ethers such as diisopropyl ether, methyl tert-butyl ether and the like; esters such as ethyl acetate, isopropyl acetate and the like and water or mixture thereof.

The processes for the preparation of Tavaborole and its intermediates disclosed herein have the following advantages over the processes described in the prior art:
i) the process involves the use of novel intermediate compound of compound of formula (III) and (II);
ii) the overall yield of the Tavaborole and its key intermediate is increased and the purity of the product is increased without additional purifications and column chromatographic purifications;
iii) the process avoids the use of highly flammable reagent like n-butyl lithium;
iv) the process avoids the use of tedious and cumbersome procedures multiple extractions using different solvents, column chromatographic purifications, multiple isolation/recrystallizations;
vii) the processes involve, easy work-up methods and simple isolation processes, and there is a reduction in chemical waste.

The process details of the invention are provided in the examples given below, which are provided by way of illustration only and therefore should not be construed to limit the scope of invention.

### Examples

### Example-1:

### Preparation of 1-bromo-4-fluoro-2-trityloxymethyl-benzene [Compound of formula (IV)]

Trityl chloride (204 gm) was added to a stirred solution of methylene chloride (150 ml) at 25°C - 30°C. DIPEA (136 ml) was added to the reaction mixture and heated to 40°C - 45°C. To obtained reaction mixture was added solution of (2-bromo-5-fluoro-phenyl)-methanol (100 gm) in methylene chloride (1050 ml) at 40°C - 45°C over a 3 hour period and stirred the said mixture for 2 hours. The reaction progress was monitored by thin layer chromatography (TLC). After completion of the reaction, reaction mixture was cooled to 25°C - 30°C and water (400 ml) was added slowly to the reaction mixture and stirred for 15 to 20 minutes. The phases were separated and organic phase was distilled under vacuum at 40°C - 45°C. Methanol (500 ml) was added to the obtained reaction mass and heated up to the reflux temperature for 1 hour. The reaction mixture was cooled to 45°C - 50°C, stirred for 30 minutes and filtered. The solid was washed with methanol (100×2 ml) and dried at 65°C under vacuum for 24 hrs to obtain crude 1-bromo-4-fluoro-2-trityloxymethyl-benzene (210.5 gm). The said crude compound was added to the stirred solution of acetone (875 ml) and heated at 58°C - 60°C with stirring for 30 minutes. The reaction mixture filtered and washed with acetone (50 ml). The filtrate was distilled under vacuum at 58°C - 60°C and cooled to 15°C - 20°C. The obtained solid was filtered and washed with acetone (102 ml) and dried at 65°C under vacuum for 24 hrs to obtain 177 gm of the compound of formula-(IV); Purity: 99.68%.

### Example-2:

### Preparation of 2-(4-fluoro-2-tritylmethyl-phenyl)-4,4,5,5-tetramethyl-[1,3,2] dioxaborolane [Compound of formula (III)]

A mixture of compound of formula (IV) (50 gm), PdCl₂(dppf)CH₂Cl₂ (1.83 gm), potassium acetate (32.91 gm) and bis(pinacolato)diboron (34.06 mg) in 1,4-dioxane (850 ml) was heated at 90°C and maintained for 25 hours. The reaction mixture cooled to 25°C - 30°C, filtered and washed the bed with 1,4-dioxan (50 ml). The solvent was distilled under vacuum at 25°C - 30°C and obtained mass was added with isopropanol (200 ml) at 35°C - 40°C and stirred for 1 hour at 0°C - 5°C. The obtained solid was filtered and washed with isopropanol (50 ml) and dried at 25°C to 30°C under vacuum for 4 hrs to obtain the title compound (41.5 gm).

¹H NMR (DMSO-d6. 400MHz) δ (ppm): 1.117 (s, 12H), 4.381 (s, 2H), 7.079-7.128 (dt, 1H), 7.268-7.467 (m, 15H), 7.591-7.624 (dd, 1H), 7.664-7.701 (dd, 1H).

### Example-3:

### Preparation of Tavaborole [Compound of formula (I)]

10.0 gm compound of formula (III) of was added to the stirred solution of toluene (100 ml) at 25°C-30°C. TBAB (0.5 gm) was added. After the addition of concentrated hydrochloric acid (35 ml), the mixture was stirred for 21 hours at 25°C-30°C. The resulting solution was diluted with aqueous sodium hydroxide (1.61 gm in 8.5 ml water) at 15°C-20°C and filtered through hyflo bed. The phases were separated and concentrated hydrochloric acid (5 ml) was added to the aqueous layer at 15°C-20°C and stirred for 30 minutes. The obtained solid was filtered and washed with chilled water (20 ml) and dried at 50°C under vacuum for 24 hrs to obtain Tavaborole (2.45 gm); Purity: 99.92%.

### Example-4:

### Preparation of compound of formula (II)

A mixture of compound of formula (IV) (50 gm), PdCl₂(dppf).CH₂Cl₂ (1.83 gm), potassium acetate (32.91 gm) and bis(pinacolato)diboron (34.06 mg) in 1,4-dioxane (850 ml) was heated at 90°C and maintained for 25 hours. The reaction mixture was cooled to 25°C - 30°C, filtered and washed the bed with 1,4-dioxan (50 ml). Diethanolamine (41.13 gm) was added and stirred for 24 hrs at 25°C - 30°C. The solid was filtered, washed with 1,4-dioxane (100 ml) and dried at 25°C to 30°C under vacuum for 4 hrs to obtain the compound of formula (II) (44 gm); purity: 99%.

¹H NMR (DMSO-d6. 400MHz) δ (ppm): 2.490-2.519 (t, 2H), 2.704-2.789 (dt, 2H), 3.652-3.702 (dt, 2H), 3.888-3.948 (q, 2H), 4.306 (s, 2H), 6.209 (s, 1H), 6.945-6.951 (d, 1H), 6.972-6.997 (d, 1H), 7.259-7.445 (m, 15H), 7.734-7.771 (t, 1H).

### Example-5:

### Preparation of Tavaborole [Compound of formula (I)]

8.0 gm compound of formula (II) of was added to the stirred solution of THF (53.3 ml) at 25°C-30°C. Water (26.6 ml) & concentrated hydrochloric acid (36.6 ml) were added and stirred at 25°C-30°C for 24 hrs. The pH of resulting solution was adjusted to 7-8 using sodium hydroxide at 25°C-30°C. The phases were separated and aqueous phase was extracted with methylene chloride (10×2 ml). The obtained MDC phase was mixed with THF layer and solvent was removed under reduced pressure at 50°C. Aqueous solution of sodium hydroxide (25 ml, 30%) was added and stirred for 15 minutes. The solution was filtered to remove tritanol and pH of the solution was adjusted to 1-3 by using concentrated hydrochloric acid (20 ml) at 15°C-20°C. The solid was filtered and dissolved in methylene chloride (30 ml). The resulting solution was washed with acidic brine (10 ml, 20%) and solvent was removed under reduced pressure to obtain Tavaborole (1.0 gm); Purity: 99.79%.

Example 6 (reference example not part of the invention):

### Preparation of Tavaborole ethanolamine salt

Tavaborole crude (3.7 gm, HPLC purity = 98.5%) was added to ethyl acetate (48 ml) and stirred at room temperature for 15 minutes to get the clear solution. To this clear solution was added 2.24 gm of ethanol amine and the reaction was stirred at 25 °C to 30 °C for 30 minutes. The obtained solid was filtered and washed with ethyl acetate and dried under vacuum at 50 °C to 55 °C for 6 hours to obtain the title compound Tavaborole ethanol amine salt (4.3 gm) (HPLC purity = 99.90%).

¹H NMR (DMSO-d6. 400MHz) δ (ppm): 2.886-2.915 (t, 2H), 3.758-3.789(t, 2H), 4.681(s, 2H), 5.799 (s-broad, 2H), 6.880-6.930 (dt, 2H), 7.311-7.345 (t, 1H).

Example 7 (reference example not part of the invention):

### Preparation of Tavaborole from Tavaborole ethanolamine salt

A solution of L-tartaric acid (2.88 gm) was prepared in water (37.5 ml) and was heated to 50 °C-55 °C. Tavaborole ethanol amine salt (2.5 gm) was added portion wise at the same temperature in 1 hour and the reaction mass was further maintained at same temperature for another 1 hour. The obtained solid was filtered, washed with water and dried under vacuum to obtain the tittle compound Tavaborole (1.6 gm) (HPLC purity = 99.96%).

## Claims

1. A process for the preparation of Tavaborole of formula (I) comprising the steps of:
a) treating (2-bromo-5-fluoro-phenyl)-methanol of formula (V) with trityl chloride in the presence of base and suitable solvent to give 1-bromo-4-fluoro-2-trityloxymethyl-benzene of formula (IV); 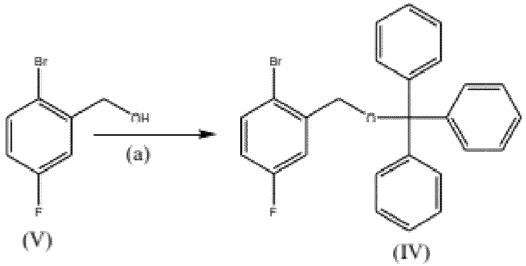
b) reacting of compound of formula (IV) with bis(pinacolato)diboron in the presence of a transition metal catalyst and a base in suitable solvent to give 2-(4-fluoro-2-tritylmethyl-phenyl)-4,4,5,5-tetramethyl-[1,3,2]dioxaborolane of compound of formula (III); 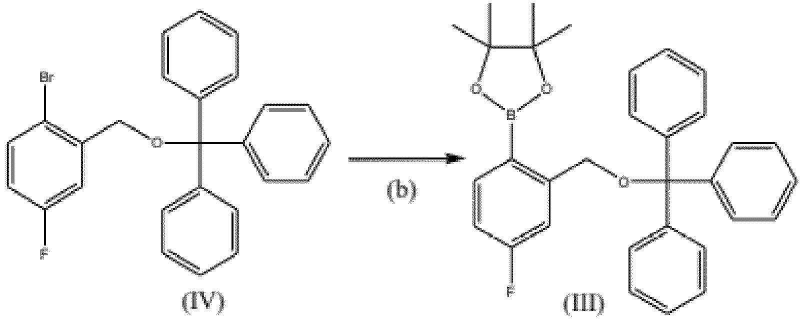
c) optionally transesterifying the compound of formula (III) with diethanolamine in suitable solvent to provide the compound of formula (II); 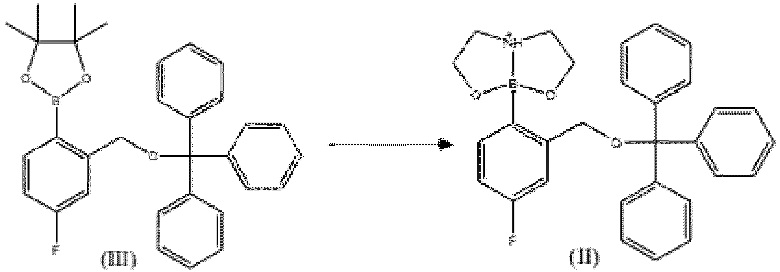
d) deprotecting and cyclizing the compound of formula (II) or (III) in the presence of suitable acid and solvent to give Tavaborole of formula (I); and 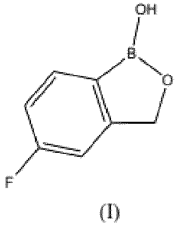
e) optionally purifying Tavaborole of formula (I).

2. The process according to claim 1, wherein solvent used in step a) or step d) is selected from methanol, ethanol, propanol, isopropanol, butanol, methylene chloride, chloroform, diisopropyl ether, methyl tert-butyl ether, dioxane, tetrahydrofuran, ethyl acetate, isopropyl acetate, methyl isobutyl ketone, acetone, dimethylformamide, dimethyl sulfoxide, N-methylpyrrolidone, water or mixture thereof.

3. The process according to claim 1, wherein base used in step a) is selected from triethylamine, diisopropylamine, diisopropylethylamine, piperidine, pyridine N-methyl morpholine N, N- dimethylbenzylamine, picoline, lutidine, lithium carbonate, sodium carbonate, potassium carbonate, barium carbonate, calcium carbonate, magnesium carbonate, sodium hydroxide, potassium hydroxide, barium hydroxide, calcium hydroxide or magnesium hydroxide.

4. The process according to claim 1, wherein transition metal catalyst used in step b) is selected from Pd(PPh₃)₄, PdCl₂(dppf).CH₂Cl₂, P(i-Pr)₃, P(cyclohexyl)₃, 2-dicyclohexylphosphino-2',4',6'-triisopropylbiphenyl (X-Phos), 2-dicyclohexyl phosphino-2',6'-dimethoxybiphenyl (S-Phos), (2,2"-bis(diphenylphosphino)-1,1"-binaphthyl) (BINAP) or Ph2P(CH2)ₙPPh₂ with n is 2 to 5.

5. The process according to claim 1, wherein base used in step b) is selected from potassium acetate, potassium phosphate, potassium carbonate, trimethylamine or triethylamine.

6. The process according to claim 1, wherein suitable solvent used in step b) or step c) is selected from the group acetonitrile, tetrahydrofuran, dioxane, dimethylformamide, dimethylacetamide, dimethyl sulfoxide, hexamethylphsophoric triamide, sulforan, N-methylpyrrolidone, benzene, toluene, xylene, ethylbenzene, diethylbenzene, styrene, vinyltoluene, divinylbenzene, alpha-methylstyrene or mixture thereof.

7. The process according to claim 1, wherein the acid used in step d) is selected from formic acid, oxalic acid, acetic acid, trimethyl acetic acid, trifluoroacetic acid, methanesulfonic, p-toluene sulfonic acid, hydrochloric acid, hydrobromic acid, sulfuric acid, pivalic acid or phosphoric acid.

8. A compound of formula (III),

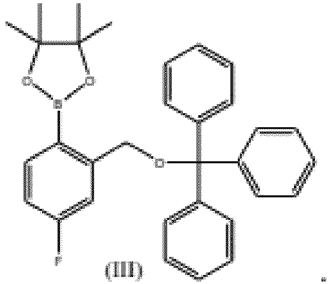

9. A compound of formula (II),

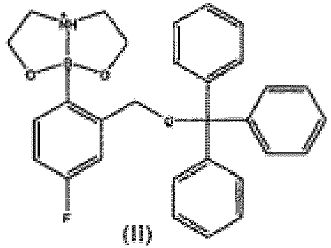

## Patentansprüche

1. Verfahren zur Herstellung von Tavaborol der Formel (I), das die folgenden Schritte umfasst:
a) Behandeln von (2-Brom-5-fluor-phenyl)-methanol der Formel (V) mit Tritylchlorid in Gegenwart einer Base und eines geeigneten Lösungsmittels, um 1-Brom-4-fluor-2-trityloxymethyl-benzol der Formel (IV) zu erhalten; 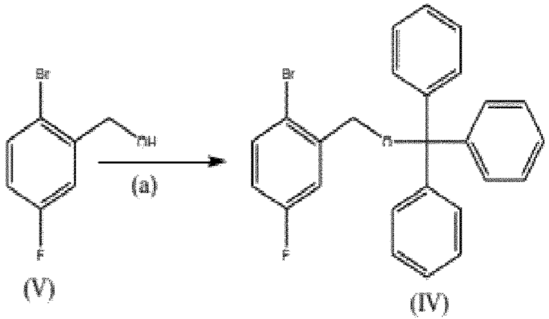
b) Umsetzen der Verbindung der Formel (IV) mit Bis(pinacolato)diboron in Gegenwart eines Übergangsmetallkatalysators und einer Base in einem geeigneten Lösungsmittel, um 2-(4-Fluor-2-tritylmethyl-phenyl)-4,4,5,5-tetramethyl-[1,3,2]Dioxaborolan der Verbindung der Formel (III) zu erhalten; 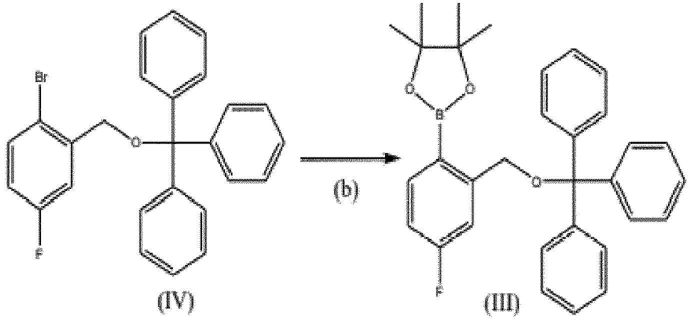
c) gegebenenfalls Umesterung der Verbindung der Formel (III) mit Diethanolamin in einem geeigneten Lösungsmittel, um die Verbindung der Formel (II) zu erhalten; 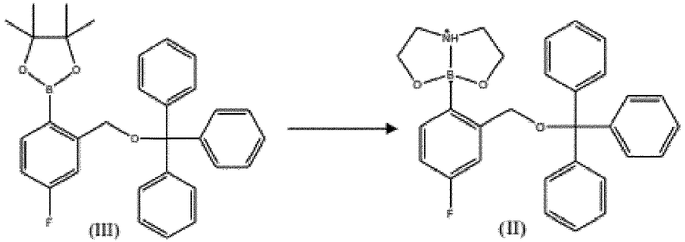
d) Entschützen und Cyclisieren der Verbindung der Formel (II) oder (III) in Gegenwart einer geeigneten Säure und eines geeigneten Lösungsmittels, um Tavaborol der Formel (I) zu erhalten; und 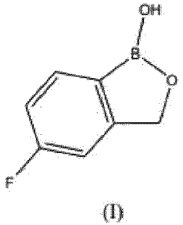
e) gegebenenfalls Reinigung von Tavaborol der Formel (I).

2. Verfahren nach Anspruch 1, wobei das in Schritt a) oder Schritt d) verwendete Lösungsmittel aus Methanol, Ethanol, Propanol, Isopropanol, Butanol, Methylenchlorid, Chloroform, Diisopropylether, Methyltert-butylether, Dioxan, Tetrahydrofuran, Ethylacetat, Isopropylacetat, Methylisobutylketon, Aceton, Dimethylformamid, Dimethylsulfoxid, N-Methylpyrrolidon, Wasser oder einer Mischung davon ausgewählt ist.

3. Verfahren nach Anspruch 1, wobei die in Schritt a) verwendete Base aus Triethylamin, Diisopropylamin, Diisopropylethylamin, Piperidin, Pyridin N-Methylmorpholin N, N-Dimethylbenzylamin, Picolin, Lutidin, Lithiumcarbonat, Natriumcarbonat, Kaliumcarbonat, Bariumcarbonat, Calciumcarbonat, Magnesiumcarbonat, Natriumhydroxid, Kaliumhydroxid, Bariumhydroxid, Calciumhydroxid oder Magnesiumhydroxid ausgewählt ist.

4. Verfahren nach Anspruch 1, wobei der in Schritt b) verwendete Übergangsmetallkatalysator aus Pd(PPh₃)₄, PdCl₂(dppf).CH₂Cl₂, P(i-Pr)₃, P(cyclohexyl)₃, 2-Dicyclohexylphosphino-2',4',6'-triisopropylbiphenyl (X-Phos), 2-Dicyclohexylphosphino-2',6'-dimethoxybiphenyl (S-Phos), (2,2 "-bis (diphenylphosphino)-l,l"-Binaphthyl) (BINAP) oder Ph2P(CH2)ₙPPh₂ mit n gleich 2 bis 5, ausgewählt ist.

5. Verfahren nach Anspruch 1, wobei die in Schritt b) verwendete Base aus Kaliumacetat, Kaliumphosphat, Kaliumcarbonat, Trimethylamin oder Triethylamin ausgewählt ist.

6. Verfahren nach Anspruch 1, wobei das in Schritt b) oder Schritt c) verwendete geeignete Lösungsmittel aus der Gruppe Acetonitril, Tetrahydrofuran, Dioxan, Dimethylformamid, Dimethylacetamid, Dimethylsulfoxid, Hexamethylphosphorsäuretriamid, Sulforan, N-Methylpyrrolidon, Benzol, Toluol, Xylol, Ethylbenzol, Diethylbenzol, Styrol, Vinyltoluol, Divinylbenzol, alpha-Methylstyrol oder einer Mischung davon ausgewählt ist.

7. Verfahren nach Anspruch 1, wobei die in Schritt d) verwendete Säure aus Ameisensäure, Oxalsäure, Essigsäure, Trimethylessigsäure, Trifluoressigsäure, Methansulfonsäure, p-Toluolsulfonsäure, Salzsäure, Bromwasserstoffsäure, Schwefelsäure, Pivalinsäure oder Phosphorsäure ausgewählt ist.

8. Eine Verbindung der Formel (III),

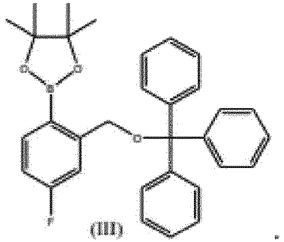

9. Eine Verbindung der Formel (II),

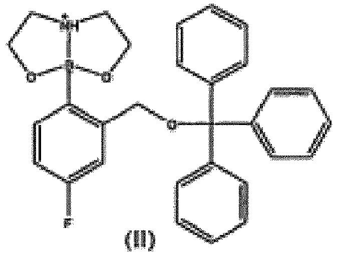

## Revendications

1. Procédé de préparation de Tavaborole de formule (I) comprenant les étapes de :
a) traitement du (2-bromo-5-fluoro-phényl)-méthanol de formule (V) avec du chlorure de trityle en présence d'une base et d'un solvant approprié pour donner le 1-bromo-4-fluoro-2-trityloxyméthyl-benzène de formule (IV) ; 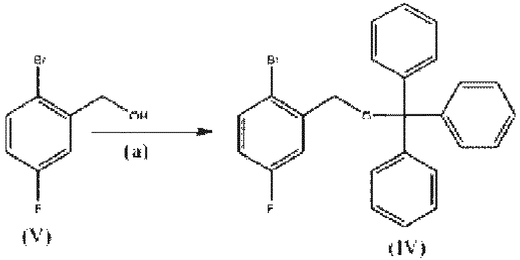
b) réaction du composé de formule (IV) avec du bis(pinacolato)dibore en présence d'un catalyseur de métal de transition et d'une base dans un solvant approprié pour donner le 2-(4-fluoro-2-tritylméthyl-phényl)-4,4,5,5-tétraméthyl-[1,3,2]dioxaborolane du composé de formule (III) ; 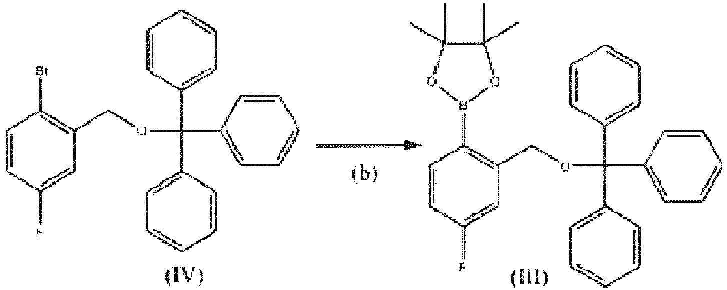
c) éventuellement transestérification du composé de formule (III) avec de la diéthanolamine dans un solvant approprié pour fournir le composé de formule (II) ; 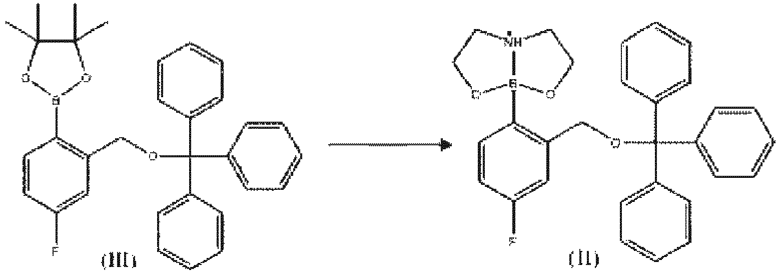
d) déprotection et cyclisation du composé de formule (II) ou (III) en présence d'un acide et d'un solvant appropriés pour donner le Tavaborole de formule (I) ; et 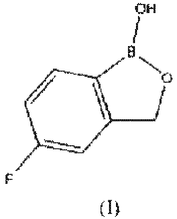
e) éventuellement purification du Tavaborole de formule (I).

2. Procédé selon la revendication 1, dans lequel le solvant utilisé à l'étape a) ou à l'étape d) est choisi parmi le méthanol, l'éthanol, le propanol, l'isopropanol, le butanol, le chlorure de méthylène, le chloroforme, l'éther diisopropylique, l'éther méthyl-tert-butylique, le dioxane, le tétrahydrofurane, l'acétate d'éthyle, l'acétate d'isopropyle, la méthylisobutylcétone, l'acétone, le diméthylformamide, le diméthylsulfoxyde, la N-méthylpyrrolidone, l'eau ou un mélange de ceux-ci.

3. Procédé selon la revendication 1, dans lequel la base utilisée à l'étape a) est choisie parmi la triéthylamine, la diisopropylamine, la diisopropyléthylamine, la pipéridine, la pyridine, la N-méthyl morpholine la N, N-diméthylbenzylamine, la picoline, la lutidine, le carbonate de lithium, le carbonate de sodium, le carbonate de potassium, le carbonate de baryum, le carbonate de calcium, le carbonate de magnésium, l'hydroxyde de sodium, l'hydroxyde de potassium, l'hydroxyde de baryum, l'hydroxyde de calcium ou l'hydroxyde de magnésium.

4. Procédé selon la revendication 1, dans lequel le catalyseur de métal de transition utilisé à l'étape b) est choisi parmi Pd(PPh₃)₄, PdCl₂ (dppf).CH₂Cl₂, P(i-Pr)₃, P(cyclohexyle)₃, 2-dicyclohexylphosphino-2',4',6'-triisopropylbiphényle (X-Phos), 2-dicyclohexyle phosphino-2',6'-diméthoxybiphényle (S-Phos), (2,2"-bis(diphénylphosphino) -1, 1"-binaphthyle) (BINAP) ou Ph2P(CH2)ₙPPh₂ où n vaut 2 à 5.

5. Procédé selon la revendication 1, dans lequel la base utilisée à l'étape b) est choisie parmi l'acétate de potassium, le phosphate de potassium, le carbonate de potassium, la triméthylamine ou la triéthylamine.

6. Procédé selon la revendication 1, dans lequel le solvant approprié utilisé à l'étape b) ou l'étape c) est choisi dans le groupe d'acétonitrile, tétrahydrofurane, dioxane, diméthylformamide, diméthylacétamide, diméthylsulfoxyde, triamide hexaméthylphosphorique, sulforane, N-méthylpyrrolidone, benzène, toluène, xylène, éthylbenzène, diéthylbenzène, styrène, vinyltoluène, divinylbenzène, alpha-méthylstyrène ou un mélange de ceux-ci.

7. Procédé selon la revendication 1, dans lequel l'acide utilisé à l'étape d) est choisi parmi l'acide formique, l'acide oxalique, l'acide acétique, l'acide triméthyl acétique, l'acide trifluoroacétique, l'acide méthanesulfonique, l'acide p-toluène sulfonique, l'acide chlorhydrique, l'acide bromhydrique, l'acide sulfurique, l'acide pivalique ou l'acide phosphorique.

8. Composé de formule (III),

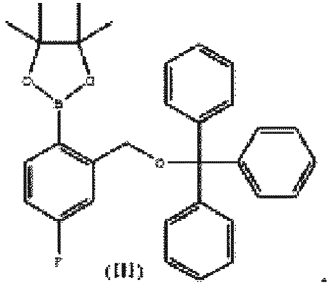

9. Composé de formule (II),
